# EUROPEAN PATENT APPLICATION

(11) **EP 2 405 698 A2**
(43) Date of publication of application: **11.01.2012**
(21) Application number: 11183701.9
(22) Date of filing: 24.09.2008
(51) Int. Cl.: H04W 60/00, H04W 48/00, H04W 68/12, H04W 84/12

(54) **System and method to facilitate handling of access terminals camped onto an access point base station**

(30) Priority: 01.10.2007 US 976741 P; 28.08.2008 US 200569
(62) Divisional of application: 08834985.7
(71) Applicant: Qualcomm Incorporated, San Diego, CA 92121-1714 (US)
(72) Inventor: Balasubramanian, Srinivasan, San Diego, CA California 92121 (US)
(74) Representative: Dunlop, Hugh Christopher

(57) **Abstract**

Devices and methods are provided for handling a visitor access terminal (AT) associated with a macro network, in response to the visitor AT entering a coverage area of an access point (AP) base station. In one approach, the method involves allowing the visitor AT to reside on a carrier channel while in idle mode, enabling registration of the visitor AT, and forwarding registration information regarding the registration to the macro network. Upon activation of the visitor AT, facilitating communication between the visitor AT and the macro network may be facilitated by, for example, forwarding a paging request to the visitor AT based at least in part on the registration information.

## Description

### Claim of Priority under 35 U.S.C. §119

The present Application for Patent claims priority to Provisional Application No. 60/976,741 entitled "SYSTEM AND METHOD TO FACILITATE HANDLING OF USER EQUIPMENT CAMPED ONTO AN ACCESS POINT BASE STATION" filed October 1, 2007, and assigned to the assignee hereof and hereby expressly incorporated by reference herein.

### BACKGROUND

### Field

The present application relates generally to wireless communications, and more specifically to methods and systems to facilitate camping of access terminals onto non-associated access point base stations and handling of connection requests initiated by the access terminals.

### Background

Wireless communication systems are widely deployed to provide various types of communication (e.g., voice, data, multimedia services, etc.) to multiple users. As the demand for high-rate and multimedia data services rapidly grows, there lies a challenge to implement efficient and robust communication systems with enhanced performance.

In recent years, users have started to replace fixed line communications with mobile communications and have increasingly demanded great voice quality, reliable service, and low prices. In addition to mobile phone networks currently in place, a new class of small base stations has emerged, which may be installed in a user's home and provide indoor wireless coverage to mobile units using existing broadband Internet connections. Such a personal miniature base station is generally known as an access point (AP) base station, also referred to as Home Node B (HNB) unit, femto cell, femto base station (fBS), base station, or a base station transceiver system (BTS). Typically, such miniature base stations are connected to the Internet and the mobile operator's network via a digital subscriber line (DSL) router or cable modem, and allow for small scale network environments, also referred to as femto networks (i.e., a network of an AP base station or femto cell).

AP base stations allow for cellular access where normal base station support for a macro network (i.e., a network of non-femto cells) is weak or unavailable (e.g., indoors, remote locations, and the like). AP base stations may be described as small base stations that connect to wireless service providers via a broadband backhaul link, such as digital subscriber line (DSL), cable internet access, T1/T3, etc., and offer typical base station functionality, such as base transceiver station (BTS) technology, radio network controller, and gateway support node services. This allows an access terminal (AT), also referred to as a cellular/mobile device or handset, or user equipment (UE), to connect to the AP base stations and utilize the wireless service. It is noted that ATs can include, for example, cellular phones, smart phones, laptops, handheld communication devices, handheld computing devices, satellite radios, navigational devices, PDAs, and/or any other suitable device for communicating over a wireless communication system.

In essence, AP base stations provide an alternative way for ATs to communicate with a macro network, particularly when normal base station support is unreliable. However, an owner of an AP base station will typically limit access to his/her AP base station to those ATs associated with the AP base station, such as, for example, his/her AT and those ATs that he/she has specifically granted access to. Sometimes, a visitor AT (i.e., an AT that is not associated with any AP base stations, or an AT that is not currently in the coverage area of its associated AP base station) may enter the coverage area of a given AP base station it is not associated with. In certain situations, such as when the given AP base station is deployed on the same carrier channel as the macro network, the visitor AT may camp within the coverage area of the given AP base station the visitor AT is idle. Because the visitor AT may not provide any indication of its current location to the macro network, the visitor AT may not be reached by the macro network. Accordingly, there is a need for a technique for handling visitor ATs camped within the coverage areas of non-associated AP base stations.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with handling a visitor access terminal (AT) associated with a macro network. In particular, described herein are method and systems for allowing the visitor AT to enter a coverage area of an access point (AP) base station and to reside on a carrier channel while in idle mode. Communication between the visitor AT and the macro network may be facilitated in one or more ways upon activation of the visitor AT.

For example, such communication may be facilitated by forwarding a paging request to the visitor AP through the AP base station. In the alternative, or in addition, such communication may be facilitated by, upon receiving a connection request from the visitor AP, transmitting the connection request and a radio environment report (RER) received from the visitor AT to the macro network. Upon receiving channel assignment information from the macro network, such information may be forwarded to the visitor AT.

According to related aspects, there is provided a wireless communications apparatus that includes: a transceiver supporting a communication link with a visitor AT associated with a macro network; at least one processor in operative communication with the transceiver; and a memory in operative communication with the at least one processor. The memory may include executable code for the at least one processor to: (a) in response to the visitor AT entering a coverage area of an AP base station, allow the visitor AT to reside on a carrier channel while in idle mode; and (b) upon activation of the visitor AT, facilitating communication between the visitor AT and the macro network.

For example, the executable code may include instructions for the least one processor to: (a) define a zone for the AP base station different than a macro network zone corresponding to the macro network; (b) enable registration of the visitor AT with the AP base station; and (c) forward registration information regarding the registration to the macro network. In the alternative, or in addition, the at least one processor may be adapted to facilitate the communication between the visitor AT and the macro network by forwarding a paging request to the visitor AT through the AP base station based on at least in part the registration information.

In another example, the at least one processor may facilitate the communication between the visitor AT and the macro network by, receiving a connection request from the visitor AT, transmitting the connection request and an RER received from the visitor AT to the macro network. The at least one processor may be adapted to receive channel assignment information from the macro network, the channel assignment information comprising a macro carrier channel for the visitor AT. The at least one processor may be further adapted to forward the channel assignment information to the visitor AT.

According to further related aspects, there is provided an apparatus for handling a visitor AT that camps within the coverage area of an AP base station. Such an apparatus may be configured as either a communication terminal or device, or as a processor or similar device for use within a communication terminal, device or an AP. The apparatus may include a means for allowing the visitor AT to reside on a carrier channel while in idle mode, and a means for enabling registration of the visitor AT. The apparatus may further include a means for forwarding registration information regarding the registration to the macro network, and a means for facilitating communication between the visitor AT and the macro network upon activation of the visitor AT.

The facilitating means may comprise a means for forwarding a paging request to the visitor AT based at least in part on the registration information. In the alternative, or in addition, the facilitating means may comprise a means for receiving a connection request from the visitor AT, and a means for transmitting the connection request and an RER received from the visitor AT to the macro network. The facilitating means may further comprise a means for receiving channel assignment information from the macro network, wherein the channel assignment information further comprises a macro carrier channel for the visitor AT. The facilitating means may further comprise a means for forwarding the channel assignment information to the visitor AT.

According to yet further related aspects, there is provided an apparatus for communicating with a macro network via a AP base station. The apparatus may be configured as either a communication terminal or device, or as a processor or similar device for use within a communication terminal, device or an AT. The apparatus may include a means for residing on a carrier channel while in an idle mode upon entering a coverage area of the AP base station, and a means for sending a connection request to the AP base station in response to switching from the idle mode to an activation mode. The AP base station may be adapted to forward the connection request to the macro network. The apparatus may further include a means for transmitting an RER to the AP base station. The AP base station may be further adapted to forward the RER to the macro network. The apparatus may include a receiving means that may be adapted to receive a paging request from the macro network via the AP base station. In the alternative, or in addition, the receiving means may be adapted to receive channel assignment information from the macro network via AP base station.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 illustrates an exemplary wireless communication system.

FIG. 2 is an illustration of a wireless communication system in accordance with various aspects set forth herein.

FIG. 3 illustrates an exemplary communication system to enable deployment of access point (AP) base stations within a network environment.

FIG. 4 illustrates one embodiment for a method for handling a visitor access terminal (AT) camped within the coverage area of an AP base station.

FIG. 5 illustrates another embodiment of a method for handling a visitor AT camped within the coverage area of an AP base station.

FIG. 6 illustrates yet another embodiment of a method for handling a visitor AT camped within the coverage area of an AP base station.

FIG. 7 illustrates an exemplary method for communicating with a macro network via an AP base station.

FIG. 8A illustrates one embodiment for an apparatus for handling a visitor AT camped within the coverage area of an AP base station.

FIG. 8B is a simplified block diagram of several sample aspects of the apparatus shown in FIG. 8A.

FIG. 9 illustrates another embodiment for an apparatus for handling a visitor AT camped within the coverage area of an AP base station.

FIG. 10 illustrates an exemplary apparatus for communicating with a macro network via an AP base station.

### DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) can be practiced without these specific details. In other instances, well-known structures and devices are shown in block diagram form in order to facilitate describing one or more embodiments.

As previously mentioned, there is a need for an access point (AP) base station that can effectively handle an access terminal (AT) that, thought not affiliated with the AP base station, camps within a coverage area of the AP base station and cannot otherwise be reached by a macro network. The techniques described herein address the need for the handling of such visitor ATs by providing techniques that allow the visitor AT to be paged by the macro network via the AP base station, and that allow the visitor AT to originate a connection with the macro network via the AP base station.

AP base stations can be deployed to individual consumers and placed in homes, apartment buildings, office buildings, and the like. An AP base station can communicate wirelessly with an AT in range of the AP base station utilizing a licensed cellular transmission band. Further, AP base stations may be connected to a core cellular network by way of an Internet Protocol (IP) connection, such as a Digital Subscriber Line (DSL, e.g., including Asymmetric DSL (ADSL), High data rate DSL (HDSL), Very high speed DSL (VDSL), etc.), a TV cable carrying Internet Protocol (IP) traffic, a Broadband over Power Line (BPL) connection, or like connection. The connection between the IP line and the cellular network can be a direct connection, or by way of the Internet. An AP base station, therefore, can provide cellular support to an AT or cellular handset and route cellular traffic (e.g., voice, data, video, audio, Internet, etc.) to a macro cellular network through the IP connection. This mechanism can save consumers air time costs and reduce a network provider's cellular network traffic load. Also, cellular coverage inside a home, office building, apartment, etc. can be greatly improved via implementation of AP base stations.

Although an AP base station is capable of forming a cellular link (e.g., a wireless link utilizing one or more licensed radio network frequencies) with multiple ATs, a consumer typically desires only his or her own traffic to be carried by a private IP connection connected to the AP base station. For instance, consumers may wish to preserve IP bandwidth for their own use, rather than for the use of other AT users. As a result, a AP base station is generally associated only with a single AT or group of ATs, and traffic related to such AT(s) is routed over the consumer's IP connection, whereas traffic related to other ATs is blocked. Consequently, although the AP base station can communicate with multiple ATs regardless of subscriber, the AP base station is typically programmed to ignore devices that are not associated with a particular consumer, service plan, and/or the like.

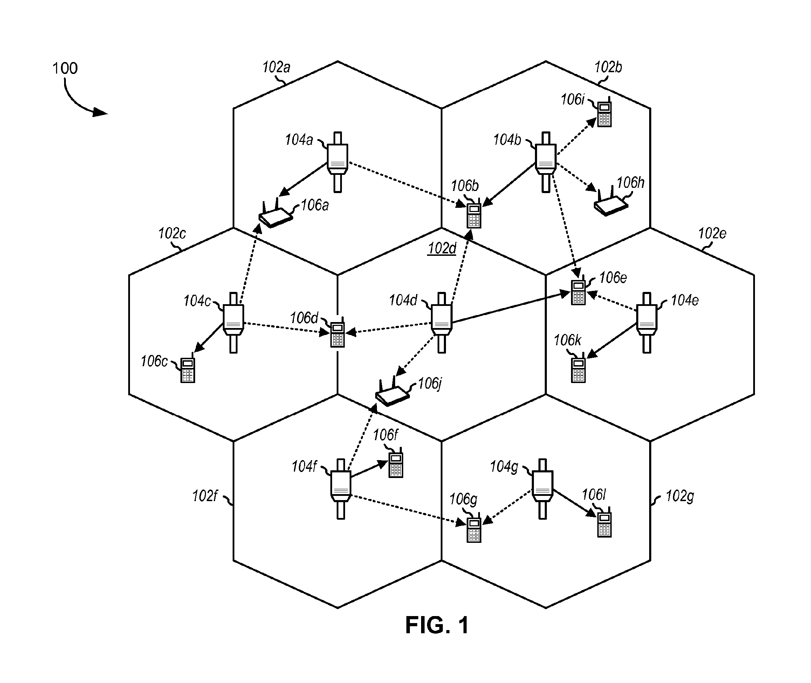

FIG. 1 illustrates an exemplary wireless communication system 100 adapted to support a number of users, in which various disclosed embodiments and aspects may be implemented. As shown in FIG. 1, by way of example, system 100 provides communication for multiple cells 102, such as, for example, macro cells 102a-102g, with each cell being serviced by a corresponding AP base station 104 (such as AP base stations 104a-104g). Each cell may be further divided into one or more antenna groups, also referred to as sectors. Various ATs 106, including ATs 106a-106k may be dispersed throughout the system 100. Each AT 106 may communicate with one or more APs 104 on a forward link and/or a reverse link at a given moment, depending upon whether the AT is active and whether it is in soft handoff, for example. The wireless communication system 100 may provide service over a large geographic region, for example, macro cells 102a-102g may cover a few blocks in a neighborhood.

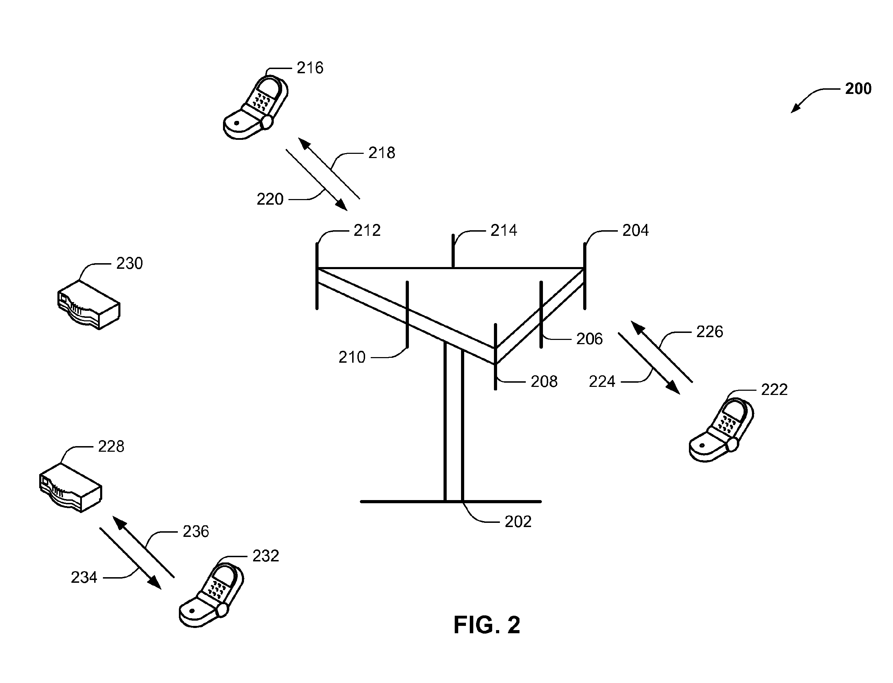

Referring now to FIG. 2, a wireless communication system 200 is illustrated in accordance with various embodiments presented herein. System 200 comprises a base station 202 that can include multiple antenna groups. For example, one antenna group can include antennas 204 and 206, another group can comprise antennas 208 and 210, and an additional group can include antennas 212 and 214. Two antennas are illustrated for each antenna group; however, more or fewer antennas can be utilized for each group. Base station 202 can additionally include a transmitter chain and a receiver chain, each of which can in turn comprise a plurality of components associated with signal transmission and reception (e.g., processors, modulators, multiplexers, demodulators, demultiplexers, antennas, etc.), as will be appreciated by one skilled in the art. Base station 202 can communicate with one or more ATs, such as, for example, AT 216 and AT 222.

As depicted in FIG. 2, AT 216 is in communication with antennas 212 and 214, where antennas 212 and 214 transmit information to AT 216 over a forward link 218 and receive information from AT 216 over a reverse link 220. Moreover, AT 222 is in communication with antennas 204 and 206, where antennas 204 and 206 transmit information to AT 222 over a forward link 224 and receive information from AT 222 over a reverse link 226. In a Frequency Division Duplex (FDD) system, forward link 218 can utilize a different frequency band than that used by reverse link 220, and forward link 224 can employ a different frequency band than that employed by reverse link 226, for example. Further, in a Time Division Duplex (TDD) system, forward link 218 and reverse link 220 can utilize a common frequency band and forward link 224 and reverse link 226 can utilize a common frequency band.

Each group of antennas and/or the area in which they are designated to communicate can be referred to as a sector of base station 202. For example, antenna groups can be designed to communicate to ATs in a sector of the areas covered by base station 202. In communication over forward links 218 and 224, the transmitting antennas of base station 202 can utilize beamforming to improve signal-to-noise ratio of forward links 218 and 224 for ATs 216 and 222. Also, while base station 202 utilizes beamforming to transmit to ATs 216 and 222 scattered randomly through an associated coverage, ATs in neighboring cells can be subject to less interference as compared to a base station transmitting through a single antenna to all its ATs. Moreover, ATs 216 and 222 can communicate directly with one another using a peer-to-peer or ad hoc technology in one example.

Similar functionality of base station 202 can be implemented in AP base stations 228 and 230, which can be deployed in smaller scale locations, such as a residence or office building for example. As mentioned previously, AP base stations are also referred to as femto cells or Home Node B (HNB) units, and can have a broadband backhaul link to a wireless service provider, such as over DSL, cable, T1/T3, etc., and can provide wireless communication service to one or more ATs. As shown, AP base station 228 can communicate with one or more AT(s) 232 over a forward link 234 and receive communication from the AT(s) 232 over a reverse link 236 similarly to the base station 202.

According to an example, AP base station 230 can be deployed to provide wireless service access. AP base station 230 can connect to a wireless service access provider via broadband backhaul link, one or more disparate femto cells or macro cells over-the-air, etc. Upon being deployed, AP base station 230 can optionally self-configure to avoid interference with surrounding femto cells (e.g., AP base station 228) and macro cells (e.g., base station 202 or a sector/cell thereof). In this regard, AP base station 230 can receive signals from the base station 202 and disparate AP base station 228 much like ATs 216, 222, and 232. The signals can be overhead system messages that can be utilized by the AP base station 230 to determine configuration parameters utilized by the disparate AP base station 228 and/or base station 202.

The configuration parameters can be determined by AP base station 230 for similar environment configuration. In addition, the parameters can be determined and utilized to ensure AP base station 230 selects different parameters to mitigate interference. These parameters can include, for example, a channel identifier (e.g., a Code Division Multiple Access (CDMA) channel ID), a pseudo-noise (PN) offset, and/or the like, for AP base station 228, base station 202, and/or substantially any other surrounding transmitters. AP base station 230 can accordingly self-configure its channel identifier, PN offset, etc. so as not to interfere with the surrounding femto cells and macro cells. Additionally, AP base station 230 can utilize this information to build a neighbor list of surrounding femto cells and macro cells to facilitate hard and soft handoffs for devices communicating with AP base station 230. It is noted that AP base station 230 may be adapted to receive RF signals, for example, from AP base station 228 and/or base station 202 to determine timing, location, and/or the like.

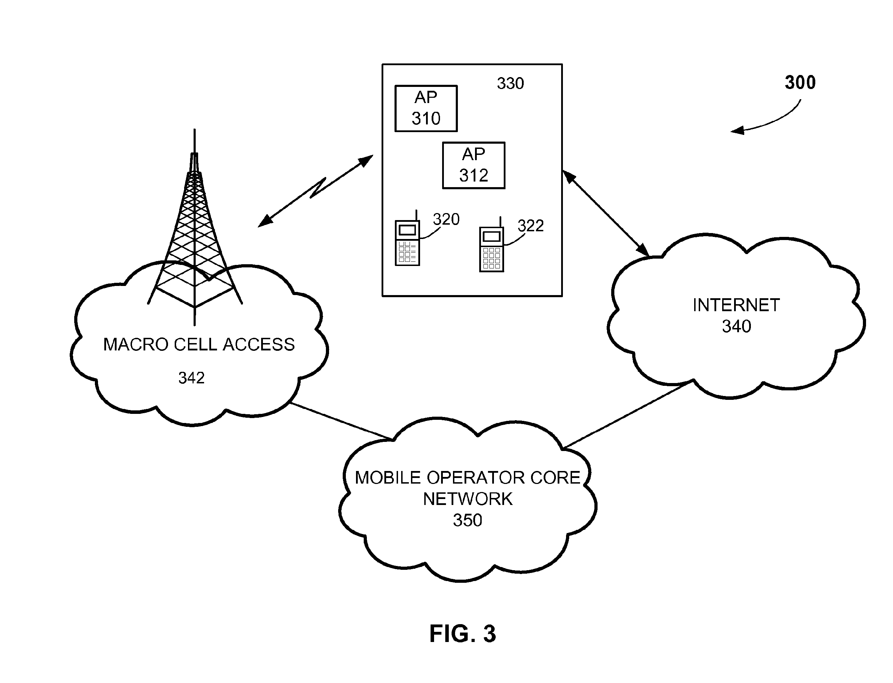

FIG. 3 illustrates an exemplary communication system to enable deployment of AP base stations within a network environment. As shown in FIG. 3, the system 300 may include multiple AP base stations, such as, for example, AP base stations 310, 312 each being installed in a corresponding small scale network environment, such as, for example, in one or more user residences 330 or the like, and may be configured to serve an associated AT 320, as well as a non-associated AT 322. While the illustrative embodiment of FIG. 3 shows two AP base stations 310 and 312, it is noted that the system 300 may include any number of AP base stations. Further, while the present description focuses on AP base station 310, it is noted that the description is also applicable to AP base station 312 and other equivalents (not shown).

AP base station 310 may be further coupled to the Internet 340 and a macro network 350 (which also be referred to as a macro cell mobile network, a mobile operator core network, or variations thereof) via a DSL router, a cable modem, or the like. It is noted that, although certain embodiments described herein use 3GPP terminology, the embodiments may be applied to 3rd Generation Partnership Project (3GPP) (Rel99, Re15, Re16, Rel7) technology, as well as 3GPP2 (1xRTT, 1xEV-DO Re10, RevA, RevB) technology, and other known and related technologies. In such embodiments described herein, the owner of AP base station 310 may subscribe to a mobile service, such as, for example, a 3G mobile service, offered through macro network 350.

AT 320 may adapted to operate both in a macro cellular environment (e.g., via macro cell access 342 operatively coupled to macro network 350) as well as in a residential small scale network environment (e.g., via AP base station 310 and/or 312). Thus, AP base station 310 may be backward compatible with any existing AT 320. In addition to macro network 350, AT 320 can be served by any number of AP base stations, predetermined or otherwise (e.g., AP base stations 310, 312 that reside within corresponding user residence 330), and generally will not be in a soft handover state with macro network 350.

If a macro AT that is not associated with AP base station 310, such as, for example, visitor AT 322, comes into the coverage area of AP base station 310, macro network 350 may direct the visitor AT 322 to another carrier frequency. AP base station 310 may be deployed in the same carrier channel as macro network 350, or, in the alternative, in a different carrier channel. When deployed in the same channel, visitor AT 322 within the coverage area of AP base station 310, when idle, may camp within the coverage area of AP base station 310, and may not provide any indication to macro network 350 of its location. During this time period, visitor AT 322 cannot be reached by macro network 350 and any incoming pages may be missed by visitor AT 322. Accordingly, it would be advantageous to implement a system and method that allows visitor AT 322 to be paged, and that allows a connection originated by visitor AT 322 over macro network 350.

In one embodiment, a zone-based registration may be used for visitor AT 322. AP base station 310 may be further defined to belong to a different zone than macro network 350. When visitor AT 322 enters into the coverage area of AP base station 310, visitor AT 322 may attempt to register with AP base station 310. AP base station 310 may forward the registration to macro network 350. When visitor AT 322 needs to be paged, the page may be forwarded to visitor AT 322 via AP base station 310.

If a predetermined set of parameters, including identifiers such as, for example, a System Identifier/Network Identifier (SID/NID) and/or a Mobile Country Code/Mobile Network Code (MCC/MNC), are configured such that visitor AT 322 has to make an access attempt (e.g., perform a registration due to change in zone or subnet ID), this may result in repeated access attempts as visitor AT 322 enters the coverage area of AP base station 310. When there is a change in such a parameter when switching from one system/network to another, visitor AT 322 will typically register to indicate to macro network 350 that it can be reached in the new system.

Alternatively, when visitor AT 322 is within a zone of macro network 350, macro network 350 may also page visitor AT 322 via AP base stations 310 and/or 312 residing within that region. This will not require any additional action on visitor AT 322, and AP base station 310 may handle the page response/connection request as described in detail below.

In one embodiment, once a connection request is received, visitor AT 322 may be provided with a traffic channel allocation to the macro carrier/cells. For example, AP base station 310 may contact the macro network 350 to allocate the required channel resources. Macro network 350 may provide the channel assignment information to AP base station 310, which is forwarded by AP base station 310 to visitor AT 322. Once visitor AT 322 receives the channel assignment it may tune itself to the macro system from that point based on the information provided in the channel assignment.

It is noted that this action may require an interface between AP base station 310 and macro network 350 to forward the RER (radio environment report) as provided by visitor AT 322 to macro network 350. For example, AP base station 310 may remove information regarding AP base station 310 from the RER prior to sending the RER to macro network 350. For example, AP base station 310 in the RER will likely be the reported reference pilot. When reformatting the RER, AP base station 310 may elect a new reference pilot and report the PN phases relative to the elected reference pilot when visitor AT 322 reported AP base station 310 as the reference pilot.

It is noted that macro network 350 may treat this action similar to a hard hand off request received over a side haul interface. Macro network 350 may provide the channel assignment information to AP base station 310, which may be sent over a common channel to visitor AT 322. The channel assignment information may include only channel assignments with macro network pilots. Macro network 350 may potentially choose another channel, other than the channel where AP base station 310 is located, so that it avoids interference issues with other ATs in the vicinity of AP base station 310. However, this is not mandated, and it is to be understood that other interference avoidance techniques can be used when visitor AT 322 is provided channel allocation over the same channel as AP base station 310.

The increased load that may be added to AP base station 310 may involve the additional registration and paging channel capacity. AP base station 310 may interact with macro network 350 in sending the connection request information and forward the traffic channel assignment of the macro carrier via AP base station 310 to visitor AT 322.

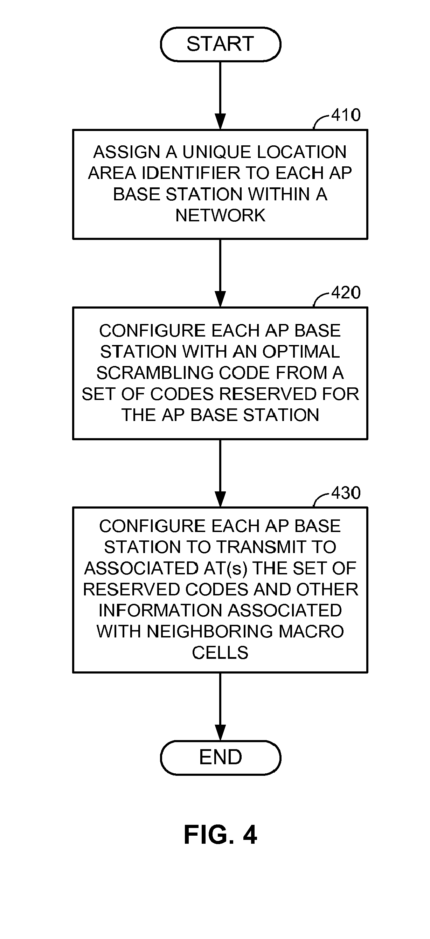

FIG. 4 illustrates one embodiment for a method for facilitating the handling of a visitor AT camped within the coverage area of an AP base station. As shown in FIG. 4, at processing block 410, the visitor AT is allowed to enter the coverage area of the AP base station and to reside on a carrier channel while in idle mode. In one approach to processing block 410, a unique location area identifier or the like is assigned to each AP base station in the network.

At processing block 420, when the visitor AT is active (i.e., no longer in idle mode), communication between the visitor AT and the macro network may be facilitated by enabling (a) transmission of page requests to the visitor AT via the AP base station, and/or (b) handling of connection requests from the AT to the macro network. In one approach to processing block 420, each AP base stations may be configured with or otherwise comprise an optimal scrambling code, such as, for example, a code that is unique for a given AP base station and that is typically independent of the data to be transmitted or received by the given AP base station. The scrambling code for the given AP base station may comprise a pseudo-random code or offset, also referred to as a pseudo-noise (PN) offset. The scrambling code for a given AP base station is generally unique for that AP base station (i.e., different from the scrambling code for other neighboring AP base stations and the scrambling code for the macro network). The scrambling code may comprise a short code (e.g., a 16-bit short code) and may be selected from a set of codes reserved for the given AP base station. At processing block 430, each AP base station may be adapted to transmit to associated AT(s) the set of reserved scrambling codes. In addition, each AP base stations may be adapted to send to associated AT(s) information associated with one or more neighboring macro cells.

In accordance with aspects of the embodiments described herein, there are provided several techniques that ATs may implement to select and communicate over systems/networks, including femto and macro networks. More specifically, there are provided techniques for detecting and breaking system selection loops, which will depend in part on which type of AT is operating on which type of system.

For example, in one embodiment, there is provided a femto AT (FAT) (i.e., AT that is capable of being associated with an AP base station, based on software upgrades, through provisioning, etc.) operating on a macro network. It is noted that such a femto AT may not be camped on its most preferred system (i.e., a corresponding AP base station), and may continue to search for the most preferred system using a Better System Reselection (BSR) approach. BSR refers to when an AT, associated with a system that is not the most preferred system as defined in a Preferred Roaming List (PRL), every so often scans to determine if better systems are available and tries to associate with a more preferred system when available.

With the acquisition entry, the femto AT may limit the search for a specific band and channel. The femto AT may be adapted to search for the most preferred system at defined time intervals (e.g., every three minutes). On discovery of a AP base station associated with the preferred system, the femto AT may select the AP base station. It is noted that the change in the SID/NID may require the femto AT to register with the selected AP base station.

In another embodiment, there is provided a home femto AT (HFAT) (i.e., femto AT that is currently in the coverage of its associated femto cell) and a guest femto AT (GFAT) (i.e., femto AT that has temporary authorization to operate on a given AP base station, typically an AP base station that the femto AT is normally not authorized to operate on.). The home femto AT and/or guest femto AT may be adapted to operate on a home AP base station (HAPBS) (i.e., AP base station on which a given AT is authorized to operate on).

It is noted that there may be one or more FATs associated with a given home AP base station. The description of the present embodiment focuses on an HFAT within the coverage area of an HABPS, but is also applicable to a GFAT camped within the coverage area of the HABPS. It is also noted that, in contrast to HFATs, there is a general category of ATs referred to herein as visitor ATs, which as explained above refers to those ATs that are not associated with any AP base stations or are not currently in the coverage area of their associated AP base stations. A visitor AT may comprise a GFAT (explained above), an alien AT (AFAT) (described below), or a macro femto AT (MFAT) (described below).

While camped within the coverage area of the HABPS, the HFAT may be on the most preferred system and generally does not perform BSR. On coverage degradation, however, the HFAT may search for other or all available systems. In one embodiment, the HFAT may use entries on a PRL to find the next available system, which will typically be the macro network.

In another embodiment, when the macro network pilot is at a preset level (e.g., 3dB) above the HAPBS, the HFAT may perform an idle handoff to the macro network. Since the macro network belongs to a different SID/NID, the HFAT typically registers as it enters the macro network.

In yet another embodiment, there is provided an alien femto AT (AFAT) (i.e., femto AT that is in the coverage of an AP base station it is not authorized to operate on) on a macro network. With the acquisition entry, the AFAT may limit its search to a specific band and channel. It is noted that a PRL entry for a SID may be identified with specific NID(s) that the AFAT is supposed to associate with. On discovery of the AFAT that is deployed in the same band and channel as the HAPBS, one of two things may happen as part of the power up sequence or BSR.

In a first scenario, when the SID/NID matches an entry in the PRL (potentially the entry used to identify the HAPBS), the AFAT may fail authentication and may move to find another system. The AFAT may blacklist this system for a defined time period (e.g., thirty seconds), after which time the AFAT may attempt associating with the SID/NID. If the AFAT enters the HAPBS within the defined time period, the AFAT will not acquire the HAPBS until the defined time period expires. In a second scenario, when the SID/NID does not match any entries in the PRL, the AFAT may continue searching for other available systems. Depending on the scenario, the AFAT may stay in the current network it is associated with or may continue its search to find a better system.

In still another embodiment, there is provided a macro femto AT (MFAT) (i.e., femto AT that is currently not in the coverage of its associated AP base station). The PRL of the MFAT typically does not contain SID or NIDs for a non-associated AP base stations or alien AP base station (AAPBS) (i.e., AP base station on which a given AT is not authorized to operate on). The MFAT may discover the AAPBS (a) while searching for coverage when the macro coverage degrades and/or (b) while performing a remaining PN scan or neighbor PN scan.

In a first scenario, when the PREF_ONLY flag is set (i.e., when the MFAT is adapted to search only for networks/systems on its PRL), the MFAT will not select the AAPBS, which will result in the MFAT leaving the current channel to find another available (potentially less preferred) system. In a second scenario, when the PREF_ONLY flag is not set (i.e., when the MFAT is not limited to networks/systems on its PRL), the MFAT may attempt to acquire the AAPBS. Here, the MFAT may discover the change in the SID and may attempt registration with the AAPBS. On the registration attempt, the AAPBS may send an SRDM (Service Redirection Message) message to the MFAT requesting that it go to the macro network.

In one approach, also referred to as the redirection approach, the SRDM may contain the band and channel of the overlapping macro network. Here, the MFAT should be redirected to another SID/NID; otherwise, it may result in the MFAT hashing back to the same channel. On receiving the SRDM, the MFAT may attempt to acquire the macro network.

In another approach, also referred to as the system reselection, when the MFAT fails authentication on the AAPBS, the MFAT may declare system loss on this channel and may perform system reselection based on the PRL entries. This may result in the MFAT selecting the same channel where it encountered the error, so the MFAT may be adapted to avoid that macro SID/NID and look for other lesser preferred systems. In no other systems are available, the MFAT may be adapted to enter power save mode (i.e., a mode of operation in which a given AT, in response to not being able to find a valid system, enters a sleep mode and periodically checks for available systems).

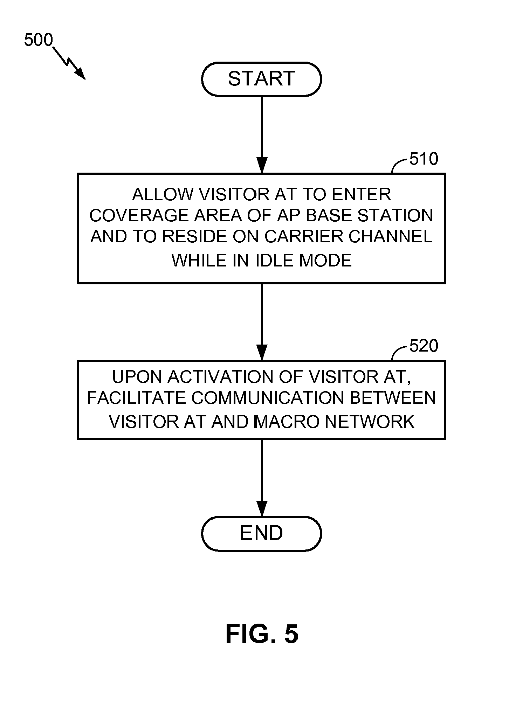

In accordance with one or more aspects of the embodiments described herein, there are provided methods for handling a visitor AT camped within the coverage area of an AP base station. With reference to the flow chart shown in FIG. 5, there is provided a method 500 that may involve allowing a visitor AT to enter a coverage area of an AP base station and to reside on a carrier channel while in idle mode (step 510). The visitor AT may optionally be associated with a macro network. Method 500 may further involve, upon activation of the visitor AT, facilitating communication between the visitor AT and the macro network (step 520).

Step 510 may comprise defining a zone for the AP base station different than a macro network zone corresponding to the macro network. Step 510 may comprise enabling registration of the visitor AT with the AP base station, and forwarding registration information regarding the registration to the macro network.

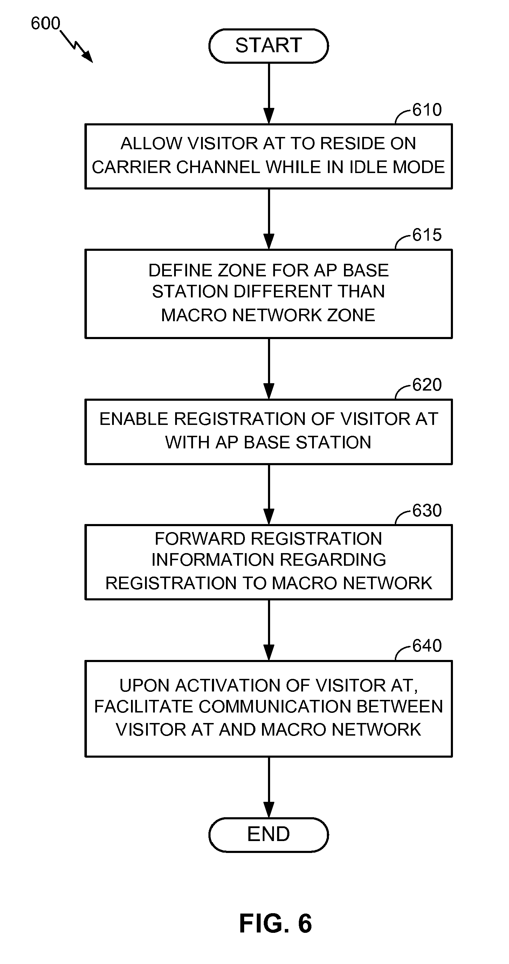

Step 520 may comprise forwarding a paging request to the visitor AT through the AP base station based at least in part on the registration information. In the alternative, or in addition, step 520 may comprise receiving a connection request from the visitor AT, and transmitting the connection request and an RER received from the visitor AT to the macro network. Step 520 may further comprise receiving channel assignment information from the macro network, the channel assignment information further comprising a macro carrier channel for the visitor AT, and forwarding the channel assignment information to the visitor AT. It is noted that the macro carrier channel for the visitor AT may be different than the carrier channel.
With reference to the flow chart shown in FIG. 6, there is provided a method 600 that may involve allowing a visitor AT to reside on a carrier channel while in idle mode (step 610), defining a zone for the AP base station different than a macro network zone corresponding to the macro network (step 615), and enabling registration of the visitor AT with an AP base station (step 620). At step 630, registration information regarding the registration may be forwarded to the macro network. Next, at step 640, upon activation of the visitor AT, communication between the visitor AT and the macro network may be facilitated.

Step 640 may comprise forwarding a paging request to the visitor AT based at least in part on the registration information. In the alternative, or in addition, step 640 may comprise, in response to receiving a connection request from the visitor AT, transmitting the connection request and an RER received from the visitor AT to the macro network. Step 640 may further comprise receiving channel assignment information from the macro network, wherein the channel assignment information comprises a macro carrier channel for the visitor AT. Step 640 may further comprise forwarding the channel assignment information to the visitor AT.

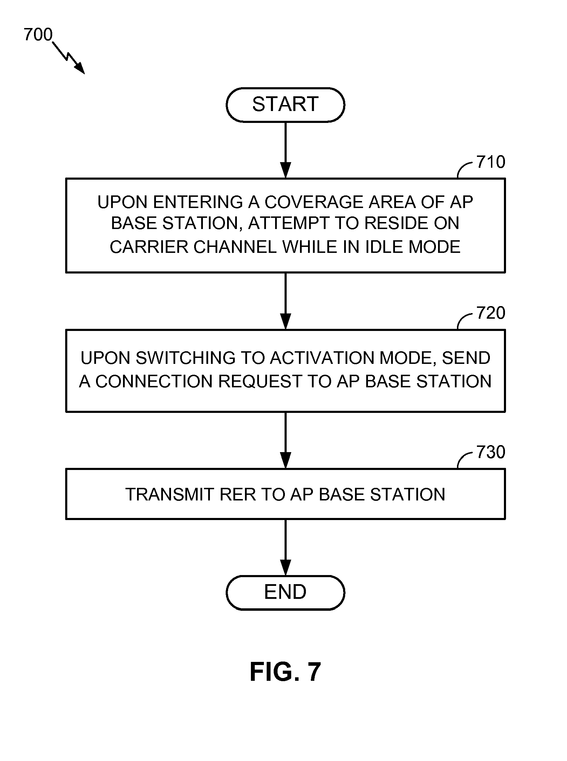

In accordance with one or more aspects of the embodiments described herein, there are provided methods for communicating with a mobile operator core network of a macro network via an AP base station, wherein the AP base is in operative communication with the core network via the Internet. With reference to the flow chart shown in FIG. 7, there is provided a method 700 that involves, upon entering a coverage area of the AP base station, attempting to reside on a carrier channel while in idle mode (710). At step 720, in response to switching from the idle mode to an activation mode, a connection request may be sent to the AP base station, wherein the AP base station is adapted to forward the connection request to the macro network. Next, at step 730 an RER may be transmitted to the AP base station, wherein the AP base station is further adapted to forward the RER to the macro network.

Method 700 may further involve receiving a paging request from the macro network via the AP base station. In the alternative, or in addition, the method 700 may further involve receiving channel assignment information from the macro network via AP base station. The channel assignment information may comprise a macro carrier channel for the visitor AT, which may be different than the carrier channel.

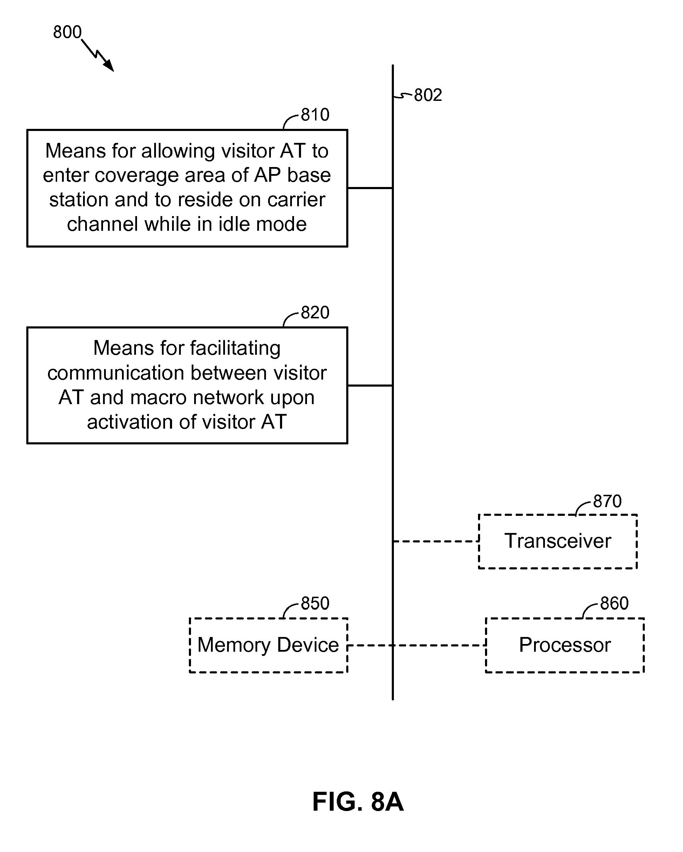

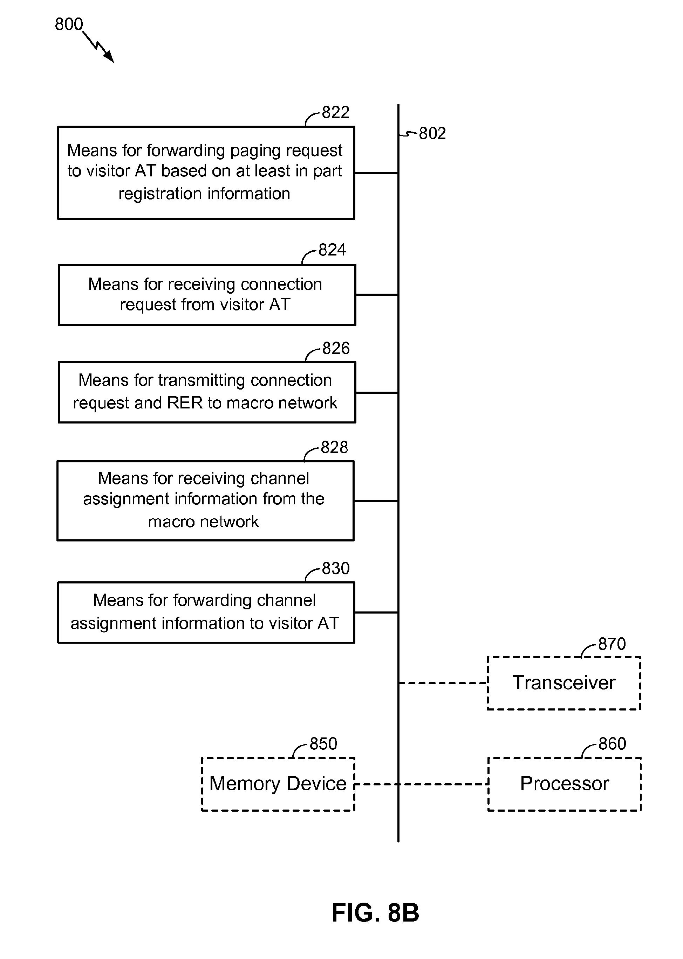

In accordance with one or more aspects of the embodiments described herein, there are provided devices and apparatuses for handling a visitor AT that camps within the coverage area of an AP base station. With reference to FIG. 8, there is provided an exemplary apparatus 800 for restricted access configuration of an AP base station. It is noted that apparatus 800 may be configured as either a communication terminal or device, or as a processor or similar device for use within a communication terminal, device or an AP.

As illustrated, apparatus 800 includes a means 810 for allowing a visitor AT, such as, for example, an AT associated with a macro network, to enter the coverage area of an AP base station and to reside on a carrier channel while in idle mode. Apparatus 800 may include a means 820 for facilitating communication between the visitor AT and the macro network upon activation of the visitor AT.

The means 810 for allowing may comprise a means for defining a zone for the AP base station different than a macro network zone corresponding to the macro network. In the alternative, or in addition, the means 810 may comprise a means for enabling registration of the visitor AT with the AP base station, and a means for forwarding registration information regarding the registration to the macro network.

The means 820 for facilitating may comprise a means for forwarding a paging request to the visitor AT through the AP base station based at least in part on the registration information. In the alternative, or in addition, the facilitating means 820 may comprise a means for receiving a connection request from the visitor AT, and a means for transmitting the connection request and an RER received from the visitor AT to the macro network. The facilitating means 820 may further comprise a means for receiving channel assignment information from the macro network, and a means for forwarding the channel assignment information to the visitor AT.

As shown in FIG. 8B, the facilitating means 820 may comprise a means 822 for forwarding a paging request to the visitor AT through the AP base station based at least in part on the registration information. In the alternative, or in addition, the facilitating means 820 may comprise a means 824 for receiving a connection request from the visitor AT (824), and a means 826 for transmitting the connection request and a radio environment report received from the visitor AT to the macro network. The facilitating means 820 may further comprise a means 828 for receiving channel assignment information from the macro network, wherein the channel assignment information may include a macro carrier channel for the visitor AT. The facilitating means 820 may further comprise a means 830 for forwarding the channel assignment information to the visitor AT.

With reference to FIGS. 8A-B, apparatus 800 may optionally include a processor 850 in the case of an apparatus 800 configured as a communication terminal, rather than as a processor. Processor 850, in such case, may be in operative communication with means 810, 820, 822, 824, 826, 828, 830 via a bus 802 or similar communication coupling. Processor 850 may effect initiation and scheduling of the processes or functions performed by means 810, 820, 822, 824, 826, 828, 830.

Also, apparatus 800 may include an optional computer readable medium or memory device 860 that may be operatively coupled to the other components of apparatus 800 via bus 802 or the like. The computer readable medium or memory device 860 may be adapted to store computer readable instructions and data for effecting the processes and behavior of either means 810, 820, 822, 824, 826, 828, 830, or processor 850 (in the case of apparatus 800 configured as a terminal) or the methods disclosed herein. The apparatus 800 may also include a transceiver 870 operatively coupled to the other components of the apparatus 800. A stand alone receiver and/or stand alone transmitter may be used in lieu of or in conjunction with the transceiver 870.

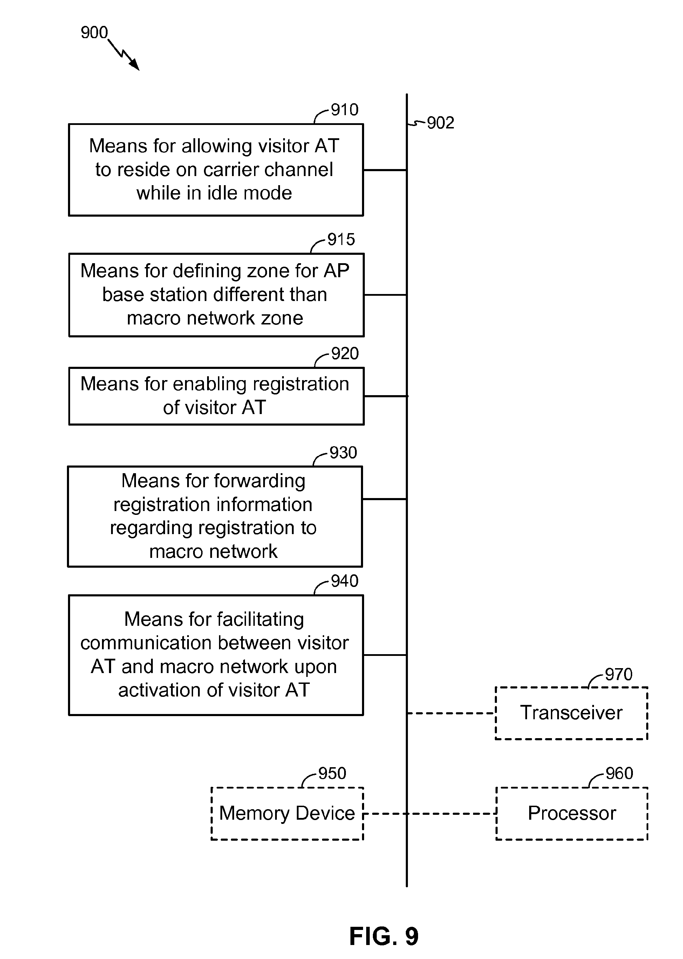

With reference to FIG. 9, there is provided another exemplary apparatus 900 for handling a visitor AT that camps within the coverage area of an AP base station. Apparatus 900 may be configured as either a communication terminal or device, or as a processor or similar device for use within a communication terminal, device or an AP.

As illustrated, apparatus 900 includes a means 910 for allowing the visitor AT to reside on a carrier channel while in idle mode, a means 915 for defining a zone for the AP base station different than a macro network zone corresponding to the macro network, and a means 920 for enabling registration of the visitor AT. The apparatus 900 may include a means 930 for forwarding registration information regarding the registration to the macro network. The apparatus 900 may further include a means 940 for facilitating communication between the visitor AT and the macro network upon activation of the visitor AT.

The means 940 for facilitating may comprise a means for forwarding a paging request to the visitor AT based at least in part on the registration information. In the alternative, or in addition, the means 940 may comprise a means for receiving a connection request from the visitor AT, and a means for transmitting the connection request and an RER received from the visitor AT to the macro network. The means 940 may further comprise a means for receiving channel assignment information from the macro network, wherein the channel assignment information further comprises a macro carrier channel for the visitor AT. The means 940 may further comprise a means for forwarding the channel assignment information to the visitor AT.

Apparatus 900 may optionally include a processor 950 in the case of an apparatus 900 configured as a communication terminal, rather than as a processor. Processor 950, in such case, may be in operative communication with means 910, 920, 930, 940 via a bus 902 or similar communication coupling. Processor 950 may effect initiation and scheduling of the processes or functions performed by means 910, 920, 930, 940.

Also, apparatus 900 may include an optional computer readable medium or memory device 960 that may be operatively coupled to the other components of the apparatus 900 via bus 902 or the like. The computer readable medium or memory device 960 may be adapted to store computer readable instructions and data for effecting the processes and behavior of either means 910, 920, 930, 940 or processor 950 (in the case of apparatus 900 configured as a terminal) or the methods disclosed herein. The apparatus 900 may also include a transceiver 970 operatively coupled to the other components of the apparatus 900. A stand alone receiver and/or stand alone transmitter may be used in lieu of or in conjunction with the transceiver 970.

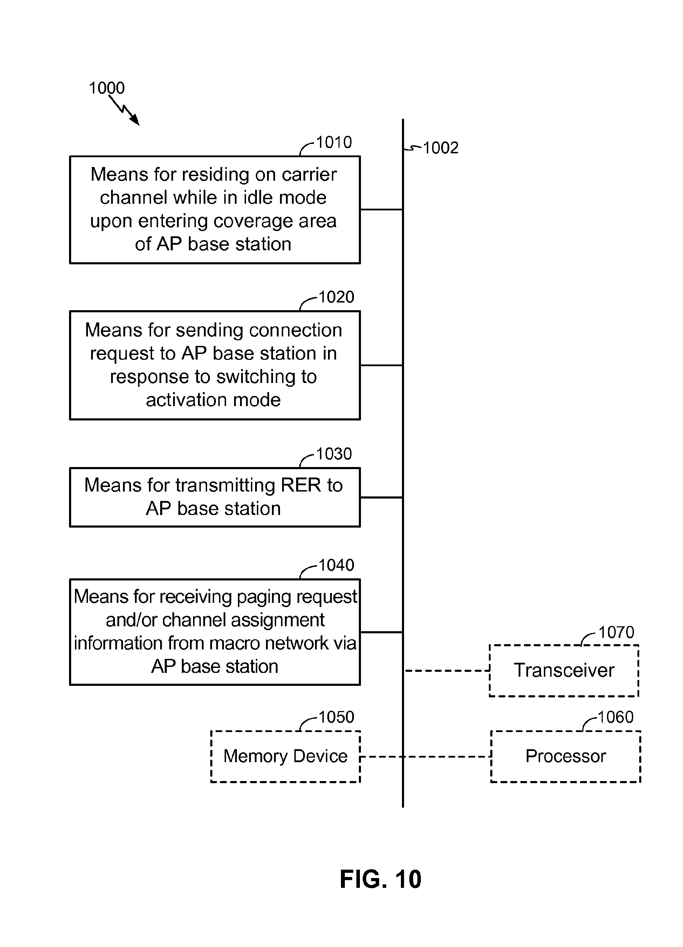

In accordance with one or more aspects of the embodiments described herein, there are provided devices and apparatuses for communicating with a macro network via an AP base station. With reference to FIG. 10, there is provided an exemplary apparatus 1000 for communicating with a macro network via a AP base station. Apparatus 1000 may be configured as either a communication terminal or device, or as a processor or similar device for use within a communication terminal, device or an AT.

As illustrated, apparatus 1000 includes a means 1010 for residing on a carrier channel while in idle mode upon entering a coverage area of the AP base station, and a means 1020 for sending a connection request to the AP base station in response to switching from the idle mode to an activation mode. The AP base station may be adapted to forward the connection request to the macro network. The apparatus 1000 may further include a means 1030 for transmitting an RER to the AP base station. The AP base station may be further adapted to forward the RER to the macro network. Apparatus 1000 may optionally include a receiving means 1040 that may be adapted to receive a paging request from the macro network via the AP base station. In the alternative, or in addition, receiving means 1040 may be adapted to receive channel assignment information from the macro network via AP base station.

Apparatus 1000 may optionally include a processor 1050 in the case of an apparatus 1000 configured as a communication terminal, rather than as a processor. Processor 1050, in such case, may be in operative communication with means 1010, 1020, 1030, 1040 via a bus 1002 or similar communication coupling. Processor 1050 may effect initiation and scheduling of the processes or functions performed by means 1010, 1020, 1030, 1040.

Also, apparatus 1000 may include an optional computer readable medium or memory device 1060 that may be operatively coupled to the other components of the apparatus 1000 via bus 1002 or the like. The computer readable medium or memory device 1060 may be adapted to store computer readable instructions and data for effecting the processes and behavior of either means 1010, 1020, 1030, 1040 or processor 1050 (in the case of apparatus 1000 configured as a terminal) or the methods disclosed herein. The apparatus 1000 may also include a transceiver 1070 operatively coupled to the other components of the apparatus 1000. A stand alone receiver and/or stand alone transmitter may be used in lieu of or in conjunction with the transceiver 1070.

While this application describes particular examples of the present invention, those of ordinary skill can devise variations of the present invention without departing from the inventive concept. For example, the teachings herein refer to circuit-switched network elements but are equally applicable to packet-switched domain network elements. It is noted that the word "exemplary" is used herein to mean "serving as an example, instance, or illustration." Any embodiment described herein as "exemplary" is not necessarily to be construed as preferred or advantageous over other embodiments.

It will be appreciated that, in accordance with one or more aspects described herein, inferences can be made regarding determining communication parameters for a plurality of surrounding femto cells and/or macro cells as described. As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure The accompanying method claims present elements of the various steps in sample order, and are not meant to be limited to the specific order or hierarchy presented.

Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Furthermore, various embodiments are described herein in connection with a mobile device. A mobile device can also be called a system, subscriber unit, subscriber station, mobile station, mobile, remote station, remote terminal, Access Terminal (AT), user terminal, terminal, wireless communication device, user agent, user device, or User Equipment (UE). A mobile device can be a cellular telephone, a cordless telephone, a Session Initiation Protocol (SIP) phone, a Wireless Local Loop (WLL) station, a Personal Digital Assistant (PDA), a handheld device having wireless connection capability, computing device, or other processing device connected to a wireless modem. Moreover, various embodiments are described herein in connection with a base station. A base station can be utilized for communicating with mobile device(s) and can also be referred to as an access point, Node B, evolved Node B (eNode B or eNB), base transceiver station (BTS) or some other terminology.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

The techniques described herein may be used for various wireless communication systems such as Code Division Multiple Access (CDMA), Multiple-Carrier CDMA (MC-CDMA), Wideband CDMA (W-CDMA), High-Speed Packet Access (HSPA, HSPA+), Time Division Multiple Access (TDMA), Frequency Division Multiple Access (FDMA), Orthogonal Frequency Division Multiple Access (OFDMA), Single Carrier Frequency Domain Multiplexing (SC-FDMA) and other multiple access systems/techniques. The terms "system" and "network" may be used interchangeably. A CDMA system may implement a radio technology such as Universal Terrestrial Radio Access (UTRA), CDMA2000, etc. UTRA may includes W-CDMA and/or other variants of CDMA. CDMA2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) is an upcoming release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). CDMA2000 and UMB are described in documents from an organization named "3rd Generation Partnership Project 2" (3GPP2). It is further noted that the wireless communication system described herein may implement one or more standards, such as, for example, IS-95, cdma2000, IS-856, W-CDMA, TD-SCDMA, etc.

The various illustrative logical blocks, modules, and circuits described in connection with the examples disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods or algorithms described in connection with the examples disclosed herein may be embodied directly in hardware, in a software module executed by a processor, or in a combination of the two. A software module may reside in Random Access Memory (RAM), flash memory, Read-Only Memory (ROM), EPROM, Electrically Erasable Programmable Read-Only Memory (EEPROM), registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another, A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the spirit or scope of the invention. Thus, the present invention is not intended to be limited to the examples shown herein but is to be accorded the widest scope consistent with the principles and novel features disclosed herein.

### ALTERNATIVE EMBODIMENTS

The following clauses relate to alternative embodiments:
Clause 1. A method for handling a visitor access terminal (AT) associated with a macro network, comprising: allowing the visitor AT to enter a coverage area of an access point (AP) base station and to reside on a carrier channel while in idle mode; and upon activation of the visitor AT, facilitating communication between the visitor AT and the macro network.
Clause 2. The method of Clause 1, wherein the allowing comprises: defining a zone for the AP base station different than a macro network zone corresponding to the macro network; enabling registration of the visitor AT with the AP base station; and forwarding registration information regarding the registration to the macro network.
Clause 3. The method of Clause 2, wherein the facilitating comprises: forwarding a paging request to the visitor AT through the AP base station based at least in part on the registration information.
Clause 4. The method of Clause 1, wherein the facilitating further comprises:
   receiving a connection request from the visitor AT; transmitting the connection request and a radio environment report received from the visitor AT to the macro network;
   receiving channel assignment information from the macro network, the channel assignment information further comprising a macro carrier channel for the visitor AT; and forwarding the channel assignment information to the visitor AT.
Clause 5. The method of Clause 4, wherein the macro carrier channel for the visitor AT is different than the carrier channel.
Clause 6. An apparatus, comprising: means for allowing a visitor AT associated with a macro network to enter the coverage area of an access point base station and to reside on a carrier channel while in idle mode; and means for facilitating communication between the visitor AT and the macro network upon activation of the visitor AT.
Clause 7. The apparatus of Clause 6, wherein the means for allowing comprises: means for defining a zone for the AP base station different than a macro network zone corresponding to the macro network; means for enabling registration of the visitor AT with the AP base station; and means for forwarding registration information regarding the registration to the macro network.
Clause 8. The apparatus of Clause 7, wherein the means for facilitating comprises: means for forwarding a paging request to the visitor AT through the AP base station based at least in part on the registration information.
Clause 9. The apparatus of Clause 6, wherein the means for facilitating further comprises: means for receiving a connection request from the visitor AT; means for transmitting the connection request and a radio environment report received from the visitor AT to the macro network; means for receiving channel assignment information from the macro network, the channel assignment information further comprising a macro carrier channel for the visitor AT; and means for forwarding the channel assignment information to the visitor AT.
Clause 10. The apparatus of Clause 9, wherein the macro carrier channel for the visitor AT is different than the carrier channel.
Clause 11. A computer program product, comprising: a computer-readable medium comprising: code for causing a computer to allow a visitor AT associated with a macro network to enter the coverage area of an access point base station and to reside on a carrier channel while in idle mode; and code for causing the computer to facilitate communication between the visitor AT and the macro network upon activation of the visitor AT.
Clause 12. A method for handling a visitor AT associated with a macro network, comprising: allowing the visitor AT to reside on a carrier channel while in idle mode; enabling registration of the visitor AT; forwarding registration information regarding the registration to the macro network; and upon activation of the visitor AT, facilitating communication between the visitor AT and the macro network.
Clause 13. The method of Clause 12, wherein the facilitating comprises forwarding a paging request to the visitor AT based at least in part on the registration information.
Clause 14. The method of Clause 12, further comprising: in response to receiving a connection request from the visitor AT, transmitting the connection request and a radio environment report received from the visitor AT to the macro network; receiving channel assignment information from the macro network, the channel assignment information comprising a macro carrier channel for the visitor AT; and forwarding the channel assignment information to the visitor AT.
Clause 15. The method of Clause 14, wherein the macro carrier channel for the visitor AT is different than the carrier channel.
Clause 16. An apparatus for handling a visitor AT associated with a macro network, comprising: means for allowing the visitor AT to reside on a carrier channel while in idle mode; means for enabling registration of the visitor AT; means for forwarding registration information regarding the registration to the macro network; and means for facilitating communication between the visitor AT and the macro network upon activation of the visitor AT.
Clause 17. The apparatus of Clause 16, wherein the means for facilitating comprises means for forwarding a paging request to the visitor AT based at least in part on the registration information.
Clause 18. The apparatus of Clause 16, further comprising: means for receiving a connection request from the visitor AT; means for transmitting the connection request and a radio environment report received from the visitor AT to the macro network; means for receiving channel assignment information from the macro network, the channel assignment information comprising a macro carrier channel for the visitor AT; and means for forwarding the channel assignment information to the visitor AT.
Clause 19. The apparatus of Clause 18, wherein the macro carrier channel for the visitor AT is different than the carrier channel.
Clause 20. A wireless communications device, comprising: a transceiver supporting a communication link with a visitor AT associated with a macro network; at least one processor in operative communication with the transceiver; a memory in operative communication with the at least one processor and comprising executable code for the at least one processor to: in response to the visitor AT entering a coverage area of an access point (AP) base station, allow the visitor AT to reside on a carrier channel while in idle mode; and upon activation of the visitor AT, facilitating communication between the visitor AT and the macro network.
Clause 21. The device of Clause 20, wherein the executable code comprises instructions for the least one processor to: define a zone for the AP base station different than a macro network zone corresponding to the macro network; enable registration of the visitor AT with the AP base station; and forward registration information regarding the registration to the macro network.
Clause 22. The device of Clause 21, wherein the at least one processor facilitates the communication between the visitor AT and the macro network by forwarding a paging request to the visitor AT through the AP base station based on at least in part the registration information.
Clause 23. The device of Clause 20, wherein the at least one processor facilitates the communication between the visitor AT and the macro network by: receiving a connection request from the visitor AT; transmitting the connection request and a radio environment report received from the visitor AT to the macro network; receiving channel assignment information from the macro network, the channel assignment information comprising a macro carrier channel for the visitor AT; and forwarding the channel assignment information to the visitor AT.
Clause 24. The device of Clause 22, wherein the macro carrier channel for the visitor AT is different than the carrier channel.
Clause 25. A computer program product, comprising: a computer-readable medium comprising: code for causing a computer to allow a visitor AT associated with a macro network to AT to reside on a carrier channel while in idle mode; code for causing the computer to enable registration of the visitor AT; code for causing the computer to forward registration information regarding the registration to the macro network; and code for causing the computer to facilitate communication between the visitor AT and the macro network upon activation of the visitor AT.
Clause 26. A method for communicating with a macro network via an access point (AP) base station, comprising: upon entering a coverage area of the AP base station, attempting to reside on a carrier channel while in an idle mode; in response to switching from the idle mode to an activation mode, sending a connection request to the AP base station, the AP base station adapted to forward the connection request to the macro network; and transmitting a radio environment report (RER) to the AP base station, the AP base station further adapted to forward the RER to the macro network.
Clause 27. The method of Clause 26, further comprising receiving a paging request from the macro network via the AP base station.
Clause 28. The method of Clause 26, further comprising receiving channel assignment information from the macro network via AP base station.
Clause 29. The method of Clause 28, wherein the channel assignment information comprises a macro carrier channel for the visitor AT.
Clause 30. The method of Clause 29, wherein the macro carrier channel for the visitor AT is different than the carrier channel.
Clause 31. A wireless communications apparatus associated with a macro network, comprising: means for residing on a carrier channel while in an idle mode upon entering a coverage area of an access point (AP) base station; means for sending a connection request to the AP base station in response to switching from the idle mode to an activation mode, the AP base station adapted to forward the connection request to the macro network; and means for transmitting a radio environment report (RER) to the AP base station, the AP base station further adapted to forward the RER to the macro network.
Clause 32. The apparatus of Clause 31, further comprising means for receiving a paging request from the macro network via the AP base station.
Clause 33. The apparatus of Clause 31, further comprising means for receiving channel assignment information from the macro network via AP base station.
Clause 34. The apparatus of Clause 33, wherein the channel assignment information comprises a macro carrier channel for the visitor AT.
Clause 35. The apparatus of Clause 34, wherein the macro carrier channel for the visitor AT is different than the carrier channel.
Clause 36. A wireless communications device associated with a macro network, comprising: a transceiver supporting a communication link with an access point (AP) base station; at least one processor in operative communication with the transceiver; a memory in operative communication with the at least one processor and comprising executable code for the at least one processor to: upon entering a coverage area of the AP base station, attempt to reside on a carrier channel while in idle mode; in response to switching from the idle mode to an activation mode, send a connection request to the AP base station, the AP base station adapted to forward the connection request to the macro network; and instruct the transceiver to transmit a radio environment report (RER) to the AP base station, the AP base station further adapted to forward the radio environment report to the macro network.
Clause 37. The device of Clause 31, wherein the transceiver is adapted to receive a paging request from the macro network via the AP base station.
Clause 38. The device of Clause 31, wherein the transceiver is adapted to receive channel assignment information from the macro network via the AP base station.
Clause 39. The device of Clause 38, wherein the channel assignment information comprises a macro carrier channel for the visitor AT.
Clause 40. The device of Clause 39, wherein the macro carrier channel for the visitor AT is different than the carrier channel.
Clause 41. A computer program product, comprising: a computer-readable medium comprising: code for causing a computer to, upon entering a coverage area of an access point (AP) base station, reside on a carrier channel while in an idle mode; code for causing the computer to, in response to the computer switching from the idle mode to an activation mode, send a connection request to the AP base station, the AP base station adapted to forward the connection request to the macro network; and code for causing the computer to transmit a radio environment report (RER) to the AP base station, the AP base station further adapted to forward the RER to the macro network.

## Claims

1. A method for handling a visitor AT associated with a macro network, comprising:
allowing the visitor AT to reside on a carrier channel while in idle mode;
enabling registration of the visitor AT;
forwarding registration information regarding the registration to the macro network; and
upon activation of the visitor AT, facilitating communication between the visitor AT and the macro network.

2. The method of Claim 1, wherein the facilitating comprises forwarding a paging request to the visitor AT based at least in part on the registration information.

3. The method of Claim 1, further comprising:
in response to receiving a connection request from the visitor AT, transmitting the connection request and a radio environment report received from the visitor AT to the macro network;
receiving channel assignment information from the macro network, the channel assignment information comprising a macro carrier channel for the visitor AT; and
forwarding the channel assignment information to the visitor AT.

4. The method of Claim 3, wherein the macro carrier channel for the visitor AT is different than the carrier channel.

5. An apparatus for handling a visitor AT associated with a macro network, comprising:
means for allowing the visitor AT to reside on a carrier channel while in idle mode;
means for enabling registration of the visitor AT;
means for forwarding registration information regarding the registration to the macro network; and
means for facilitating communication between the visitor AT and the macro network upon activation of the visitor AT.

6. The apparatus of Claim 5, wherein the means for facilitating comprises means for forwarding a paging request to the visitor AT based at least in part on the registration information.

7. The apparatus of Claim 5, further comprising:
means for receiving a connection request from the visitor AT;
means for transmitting the connection request and a radio environment report received from the visitor AT to the macro network;
means for receiving channel assignment information from the macro network, the channel assignment information comprising a macro carrier channel for the visitor AT; and
means for forwarding the channel assignment information to the visitor AT.

8. The apparatus of Claim 7, wherein the macro carrier channel for the visitor AT is different than the carrier channel.

9. A computer program product, comprising:
a computer-readable medium comprising code for causing a computer to perform the steps of any one of the methods of claims 1 to 4.
